# EUROPÄISCHE PATENTSCHRIFT

(11) **EP 0 394 764 B1**
(45) Veröffentlichungstag und Bekanntmachung des Hinweises auf die Patenterteilung: **12.01.1994**
(21) Anmeldenummer: 90106994.8
(22) Anmeldetag: 11.04.1990
(51) Int. Cl.: F16G 3/02

(54) **Kupplungsstab**
Fastening pin
Axe de jonction

(30) Priorität: 27.04.1989 DE 3913943
(43) Veröffentlichungstag der Anmeldung: 31.10.1990
(73) Patentinhaber: MATO Maschinen- und Metallwarenfabrik Curt Matthaei GmbH & Co KG, D-63071 Offenbach (DE)
(72) Erfinder:
(74) Vertreter: Schieferdecker, Lutz, Dipl.-Ing.

(56) Entgegenhaltungen:
- FR-A- 1 260 788
- FR-A- 2 196 683
- FR-A- 2 380 471
- GB-A- 252 043

## Beschreibung

Die Erfindung betrifft einen Kupplungsstab zum Befestigen von an den Enden von Förderbändern angeordneten und Kupplungsösen aufweisenden Verbindungselementen aneinander, wobei die Kupplungsösen der beiden zu verbindenden Bandenden in Reihe und parallel zueinander vorgesehen sind.

Eine derartige Verbindung von Förderbandenden mittels eines Kupplungsstabes ist bekannt (FR-A 1 260 788). Der durch die beiden kämmend angeordneten Sätze von Kupplungsösen, die jeweils einem Bandende zugeordnet sind, gesteckte Kupplungsstab führt zu einer gelenkigen Fördergurtverbindung, die es auch erlaubt, daß der Fördergurt eine gemuldete Lage einnimmt. Der Kupplungsstab ist während des Betriebs hochbelastet und wird in der Regel aus Drahtseillitzen gefertigt, die zusätzlich mit einer Flachband-Stahlwendel gepanzert sein können (FR-A 2 380 471), so daß der Kupplungsstab sich entsprechend einem muldenförmigen Bandquerschnitt krümmen kann.

Beim Herstellen der Fördergurtverbindung ist es oft mühsam und aufwendig, den Kupplungsstab durch die kämmend angeordneten Kupplungsösen der Verbindungselemente zu stecken bzw. zu treiben. Der hiermit verbundene Zeitaufwand ist oft größer als alle übrigen Arbeiten im Zusammenhang mit dem Verbinden der Fördergurtenden.

Dementsprechend liegt der Erfindung die Aufgabe zugrunde, den Kupplungsstab so auszubilden, daß er sich einfacher durch die kämmenden Kupplungsösen in die Kupplungsstellung einbringen läßt.

Diese Aufgabe wird erfindungsgemäß dadurch gelöst, daß ein Gewinde an einem Stabende angeordnet ist, dessen Steigungshöhe gleich der Stegteilung der Kupplungsösen ist.

Beim eingangs beschriebenen bekannten Kupplungsstab ist zwar auch bereits an dessen in Einführungsrichtung vorderem konischen Ende ein in Einführungsrichtung vorspringender Gewindezapfen angeordnet, dieser weist jedoch einen kleineren Durchmesser als der eigentliche Kupplungsstab auf und dient lediglich dazu, eine am hinteren Ende eines Zugseils befestigte Gewindehülse aufzuschrauben, damit das dünne Zugseil durch die Ösen durchgefädelt und dann der Kupplungsstab damit durch die Ösen in die Betriebsstellung gezogen werden kann. Diese Ausbildung und Vorgehensweise ist aufwendig.

Ferner ist zur Verwendung bei an Bandenden befestigbaren Verbindungselementen nach Art von Scharnierhälften mit kämmenden Scharnierhülsen ein starrer Scharnierbolzen bekannt, in dessen eines Ende ein flaches Gewinde eingeschnitten ist, das somit ebenfalls nicht über den Umfang der Scharnierachse vorsteht (GB-A 252 043). Im übrigen erstreckt sich hier der Gewindeabschnitt nur etwa über die halbe Länge einer einzigen Scharnierhülse. Der Sinn dieses flachen Gewindes, das zur Fixierung des Scharnierbolzens in seiner Betriebsstellung mittels einer aufzuschraubenden Mutter dienen könnte, bleibt unklar.

Anders als bei den bekannten Ausbildungen dient das erfindungsgemäß vorgesehene Gewinde am einen Stabende als Zugelement für den Kupplungsstab, wenn dieser beim Einsetzen zusätzlich gedreht wird. Dies kann mit Hilfe einer Handkurbel oder mit Hilfe eines Elektro- bzw. Druckluftantriebs geschehen. Infolge der Anpassung der Gewindesteigung an die Teilung der Kupplungsösen stützen sich dann die Gewindegänge jeweils auf den Rändern der Kupplungsösen ab.

Vorzugsweise besteht das Gewinde aus einem aufgelöteten Draht, wobei ferner das freie (vordere) Stab- und Gewindeende konisch bzw. kegelstumpfförmig sein soll, während das andere, dem Stab- und Gewindeende abgewandte (hintere) Drahtende nicht angelötet ist. Dadurch ist es möglich, nach dem Durchschrauben des Kupplungsstabes durch die Kupplungsösen den Kupplungsstab mit einem Hammer wieder ein Stück zurückzuschlagen, so daß sich das nicht angelötete freie Drahtende aufspreizt, wodurch der Kupplungsstab in seiner Betriebsstellung fixiert wird.

Weitere zweckmäßige Ausgestaltungen der Erfindung ergeben sich aus den Unteransprüchen.
Die Erfindung wird nachstehend anhand von Ausführungsbeispielen, die in der Zeichnung dargestellt sind, näher beschrieben. Dabei zeigen:
- Fig. 1:: eine Ansicht des Stabendes eines abgeschnittenen Kupplungsstabes;
- Fig. 2:: zwei zum Teil geschnittene, mit ihren Kupplungsösen kämmend aneinander liegende Verbindungselemente mit einem teilweise eingeschraubten, abgeschnittenen Kupplungsstab;
- Fig. 3:: einen abgewandelten Kupplungsstab zum Teil im Schnitt;
- Fig. 4:: eine Teilansicht der Enden zweier Förderbänder mit Verbindungselementen und einem eingesetzten Kupplungsstab;
- Fig. 5:: im Schnitt ein Endstück mit Aussengewinde und Innengewinde;
- Fig. 6:: ein Stabende mit einem Aussengewinde zum Befestigten des Endstückes gemäß Fig. 5 und
- Fig. 7:: zum Teil im Schnitt ein Stabende mit dem Endstück gemäß Figur 5.

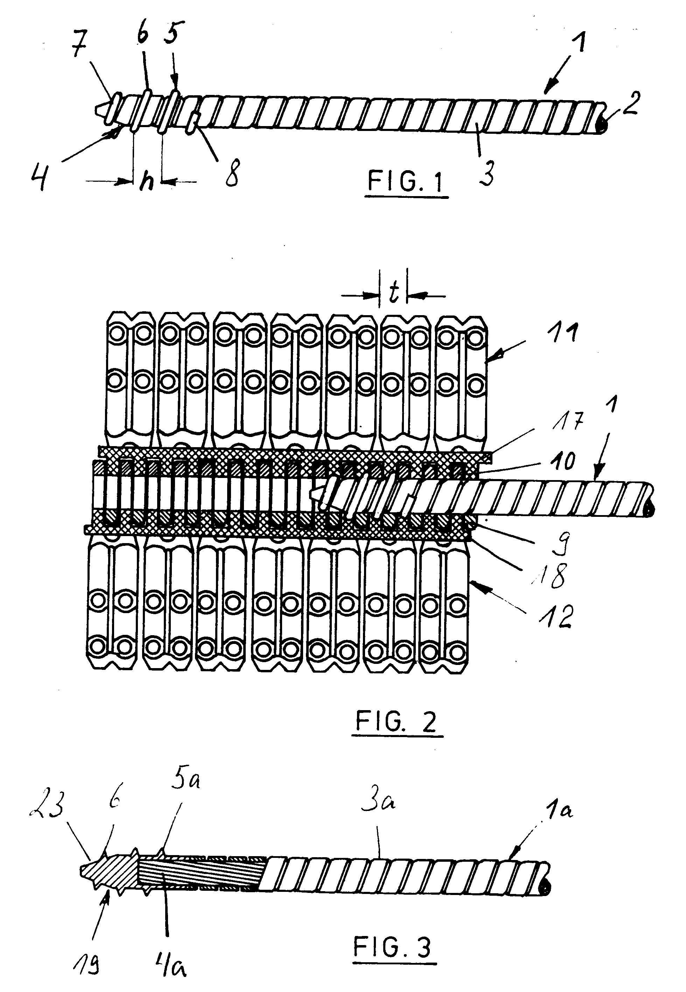

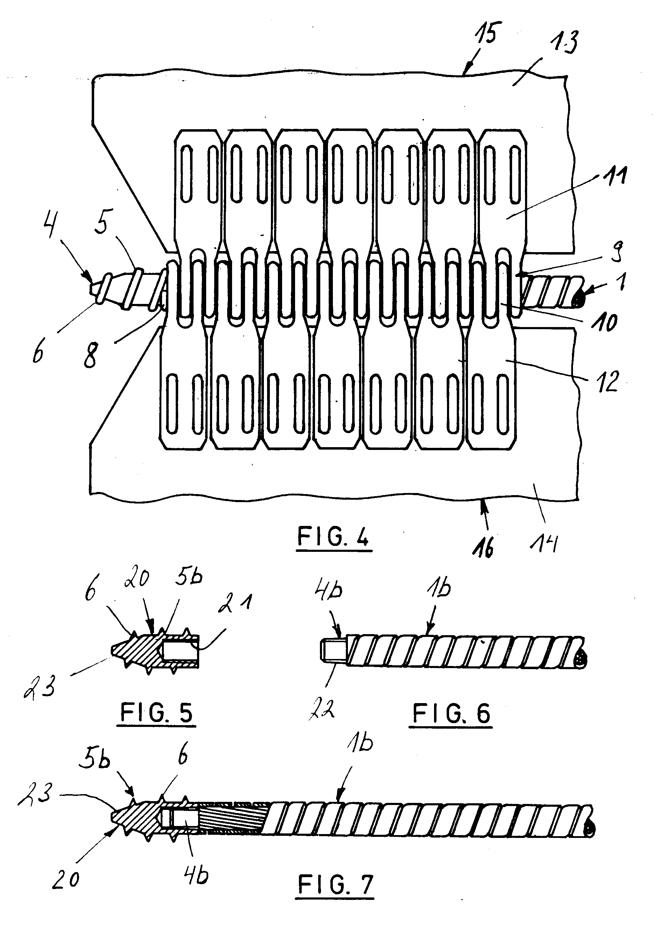

Ein Kupplungsstab 1 gemäß Figur 1 besteht beispielsweise aus einer größeren Anzahl Drahtseillitzen 2 und kann mit einer Stahlwendel 3 gepanzert sein. Im Bereich seines einen Stabendes 4 befindet sich ein Gewinde 5, das nur aus wenigen Gewindegängen 6 besteht. Sowohl das freie Stabende 4 als auch das am Stabende 4 befindliche Gewindeende 7 sind konisch bzw. kegelstumpfförmig. Das Gewinde 5 besteht vorzugsweise aus Draht und ist auf das Stabende 4 aufgelötet. Das dem Stabende 4 bzw. Gewindeende 7 abgewandte Drahtende 8 ist ein freies, nicht angelötetes Drahtstück. Es dient zum Arretieren des Kupplungsstabes 1 nach Erreichen der gewünschten Kupplungsposition und ist hierzu relativ zum Kupplungsstab 1 verschwenkbar, wie dies in Figur 4 dargestellt ist.

Die Steigungshöhe h des Gewindes 5 ist gleich der Ösenstegteilung t der Kupplungsösen 9, 10 der beiden mit Hilfe des Kupplungsstabes 1 gelenkig aneinander zu befestigenden Verbindungselemente 11, 12. Figur 2 zeigt den Kupplungsstab 1 beim Einschrauben in die kuppelnd angeordneten Verbindungselemente 11, 12, während Fig. 4 eine fertiggestellte Verbindung an den Enden 13, 14 von Förderbändern 15, 16 zeigt. Der freie Raum im Bereich der Verbindungselemente 11, 12 zwischen den Kupplungsösen 9, 10, dem Kupplungsstab 1 und den Enden 13, 14 der Förderbänder 15, 16 kann noch mit Hilfe eines Füllkörpers 17 bzw. 18 ausgefüllt sein, was das Eintreiben des Kupplungsstabes 1 grundsätzlich noch zusätzlich erschwert, bei Verwendung eines kurzen Gewindes 5 am Stabende 4 aber keine zusätzliche Beeinträchtigung mit sich bringt. Wie nämlich Figur 2 zeigt, zieht das kurze, aus einem Drahtstück bestehende Aussengewinde den Stab 1 bei Drehung unter Abstützung auf den Kupplungsösen 9, 10 sicher und zuverlässig durch alle Verbindungselemente 11, 12.

Bei dem in Figur 3 dargestellten Ausführungsbeispiel sind grundsätzlich gleiche Teile mit denselben Bezugszahlen bezeichnet und weisen zusätzlich einen Index a auf.

Der Kupplungsstab 1a ist an seinem Stabende 4a in Abwandlung gegenüber dem zuerst beschriebenen Ausführungsbeispiel nicht mit einem Drahtstück zur Bildung eines Aussengewindes versehen, sondern er trägt dort ein Endstück 19 zur Bildung des zum freien Ende hin konisch auslaufenden Gewindes 5a. Das Gewinde 5a ist wiederum ein Aussengewinde und steht ebenso wie bei dem zuerst beschriebenen Ausführungsbeispiel über die Kontur des Kupplungsstabes 1a bzw. die Kontur seiner Stahlwendel 3a vor.

Die Befestigung des Endstückes 19 am Stabende 4a bzw. dem letzten Gang der Stahlwendel 3a erfolgt wiederum durch Anlöten.

Die Figur 5 zeigt eine weitere, abgewandelte Ausführungsform von einem Endstück 20, welches gegenüber dem Endstück 19 nach Figur 3* ein Innengewinde 21 aufweist, das auf ein nur zum Befestigen dienendes Aussengewinde 22 am Stabende 4b des Kupplungsstabes 1b gemäß Figur 6 aufschraubbar ist. Das Endstück 20 ist wiederum mit einem Gewinde 5b versehen wie das Endstück 19 und kann nach dem Durchziehen des Kupplungsstabes 1 durch die Kupplungsösen 9, 10 der Verbindungselemente 11, 12 wieder vom Kupplungsstab 1b gelöst werden. Nach dem Durchziehen des Kupplungsstabes 1b durch die Verbindungselemente 11, 12 wird es nicht mehr benötigt und kann daher auch entfernt werden.
*zusätzlich

Bei allen in den Figuren dargestellten Ausführungsbeispielen stehen die Gewindegänge 6 erhaben über die Kontur des jeweiligen Gewindestabes bzw.über die Kontur der Endstücke 19, 20 vor. Ferner sind die Gewinde 5, 5a und 5b sehr kurz und bestehen nur aus wenigen Gewindegängen. Sie verlaufen jeweils steil und ihre Gewindehöhe entspricht der Ösenstegteilung. Die freien Enden 23 der Endstücke 19, 20 verlaufen ebenfalls konisch bzw. kegelstumpfförmig aus wie das freie Stabende 4 am Stab 1 gemäß Figur 1.

Die Erfindung ist nicht auf die in den Figuren dargestellten sowie beschriebenen Ausführungsbeispiele bebeschränkt, vielmehr sind noch Abwandlungen möglich, ohne von dem grundsätzlichen Erfindungsgedanken abzuweichen. Das zur Bildung der Gewindegänge 6 dienende Drahtstück kann daher grundsätzlich auch auf den Kupplungsstab 1 geschweißt werden, wenn dies vorteilhafter ist als eine Lötverbindung.

## Patentansprüche

1. Kupplungsstab (1, 1a, 1b) zum Befestigen von an den Enden (13, 14) von Förderbändern (15, 16) angeordneten und Kupplungsösen (9, 10) aufweisenden Verbindungselementen (11, 12) aneinander, wobei die Kupplungsösen (9 und 10) der beiden zu verbindenden Bandenden (13 und 14) in Reihe und parallel zueinander vorgesehen sind, **dadurch gekennzeichnet,** daß ein Gewinde (5, 5a, 5b) an einem Stabende (4, 4a, 4b) angeordnet ist, dessen Steigungshöhe (h) gleich der Stegteilung (t) der Kupplungsösen (9 bzw. 10) ist.

2. Kupplungsstab nach Anspruch 1, **dadurch gekennzeichnet,** daß das freie Stab- und Gewindeende (4, 7) konisch bzw. kegelstumpfförmig ist.

3. Kupplungsstab nach Anspruch 1 oder 2**, dadurch gekennzeichnet,** daß die Gewindegänge (6) des Gewindes (5, 5a, 5b) erhaben über den Umfang des Kupplungsstabes (1, 1a, 1b) vorstehen.

4. Kupplungsstab nach einem der Ansprüche 1 bis 3, **dadurch gekennzeichnet,** daß die Gewindegänge (6) am Stabende (4) von einem Draht gebildet sind.

5. Kupplungsstab nach Anspruch 4, **dadurch gekennzeichnet,** daß der Draht auf den Umfang des Kupplungsstabes (1) aufgelötet oder aufgeschweißt ist.

6. Kupplungsstab nach Anspruch 4 oder 5, **dadurch gekennzeichnet,** daß das dem Stab- und Gewindeende (4, 7) abgewandte hintere Drahtende (8) lose am Kupplungsstab (1) anliegt.

7. Kupplungsstab nach Anspruch 1, **dadurch gekennzeichnet,** daß das Gewinde (5a, 5b) außen auf einem am Stabende (4a, 4b) befestigbaren Endstück (19, 20) angeordnet ist.

8. Kupplungsstab nach Anspruch 7, **dadurch gekennzeichnet,** daß das Endstück (20) an seinem einen Ende ein Innengewinde (21) und das Stabende (4b) ein zur lösbaren Befestigung des Endstückes (20) dienendes Außengewinde (22) aufweisen.

9. Kupplungsstab nach Anspruch 7 oder 8, **dadurch gekennzeichnet,** daß die Gewindegänge (6) des Gewindes (5a, 5b) erhaben über den Umfang des am Kupplungsstab (1a, 1b) befestigbaren Endstücks (19, 20) vorstehen.

10. Kupplungsstab nach einem der Ansprüche 7 bis 9, **dadurch gekennzeichnet,** daß das freie Ende (23) des Endstücks (19, 20) konisch bzw. kegelstumpfförmig ist.

## Claims

1. A coupling rod (1, 1a, 1b) for fixing to each other connecting elements (11, 12) which are arranged at the ends (13, 14) of conveyor belts (15, 16) and which have coupling eyes (9, 10), wherein the coupling eyes (9 and 10) of the two belt ends (13 and 14) which are to be connected are disposed in a row and parallel to each other, characterised in that a screwthread (5, 5a, 5b) is arranged at a rod end (4, 4a, 4b), the pitch dimension (h) of the screwthread being equal to the web pitch (t) of the coupling eyes (9 and 10 respectively).

2. A coupling rod according to claim 1 characterised in that the free rod and screwthread end (4, 7) is of a conical or frustoconical configuration.

3. A coupling rod according to claim 1 or claim 2 characterised in that the flights (6) of the screwthread (5, 5a, 5b) project in raised relationship above the periphery of the coupling rod (1, 1a, 1b).

4. A coupling rod according to one of claims 1 to 3 characterised in that the screwthread flights (6) are formed at the rod end (4) by a wire.

5. A coupling rod according to claim 4 characterised in that the wire is soldered or welded on to the periphery of the coupling rod (1).

6. A coupling rod according to claim 4 or claim 5 characterised in that the rear wire end (8) which is remote from the rod and screwthread end (4, 7) bears loosely against the coupling rod (1).

7. A coupling rod according to claim 1 characterised in that the screwthread (5a, 5b) is arranged at the outside on an end portion (19, 20) which can be fixed to the rod end (4a, 4b).

8. A coupling rod according to claim 7 characterised in that at its one end the end portion (20) has a female screwthread (21) and the rod end (4b) has a male screwthread (22) which serves for releasably fixing the end portion (20).

9. A coupling rod according to claim 7 or claim 8 characterised in that the flights (6) of the screwthread (5a, 5b) project in raised relationship above the periphery of the end portion (19, 20) which can be fixed to the coupling rod (1a, 1b).

10. A coupling rod according to one of claims 7 to 9 characterised in that the free end (23) of the end portion (19, 20) is conical or frustoconical.

## Revendications

1. Barre d'accouplement (1, 1a, 1b) pour la fixation les uns aux autres d'éléments de liaison (11, 12), placés aux extrémités (13, 14) de bandes de convoyage (15, 16) et comportant des oeillets d'accouplement (9, 10), les oeillets d'accouplement (9 et 10) des deux extrémités (13 et 14) des bandes à relier étant prévus en série et parallèles les uns aux autres, caractérisée en ce qu'un filetage (5, 5a, 5b) est prévu à une extrémité (4, 4a, 4b) de la barre, filetage dont le pas (h) est égal à la division (t) des oeillets d'accouplement (9 ou 10).

2. Barre d'accouplement selon la revendication 1, caractérisée en ce que l'extrémité libre de la barre et du filetage (4, 7) est conique ou tronconique.

3. Barre d'accouplement selon les revendications 1 ou 2, caractérisée en ce que les filets (6) du filetage (5, 5a, 5b) sont en relief par rapport au pourtour de la barre d'accouplement (1, 1a, 1b).

4. Barre d'accouplement selon l'une des revendications 1 à 3, caractérisée en ce que les filets (6) sont formés à l'extrémité (4) de la barre par un fil.

5. Barre d'accouplement selon la revendication 4, caractérisée en ce que le fil est brasé ou soudé sur le pourtour de la barre d'accouplement (1).

6. Barre d'accouplement selon les revendications 4 ou 5, caractérisée en ce que l'extrémité arrière (8) du fil, tournée à l'opposé de l'extrémité (4, 7) de la barre et du filetage, s'applique librement contre la barre d'accouplement (1).

7. Barre d'accouplement selon la revendication 1, caractérisée en ce que le filetage (5a, 5b) est situé à l'extérieur sur un embout (19, 20) à fixer à l'extrémité (4a, 4b) de la barre.

8. Barre d'accouplement selon la revendication 7, caractérisée en ce que l'embout (20) présente, à l'une de ses extrémités, un taraudage (21) et l'extrémité (4b) de la barre présente un filetage externe (22) servant à la fixation amovible de l'embout (20).

9. Barre d'accouplement selon la revendication 7 ou 8, caractérisée en ce que les filets (6) du filetage (5a, 5b) sont en relief par rapport au pourtour de l'embout (19, 20) à fixer sur la barre d'accouplement (1a, 1b).

10. Barre d'accouplement selon l'une des revendications 7 à 9, caractérisée en ce que l'extrémité libre (23) de l'embout (19, 20) est conique ou tronconique.
